# EUROPEAN PATENT SPECIFICATION

(11) **EP 2 038 148 B1**
(45) Date of publication and mention of the grant of the patent: **11.04.2012**
(21) Application number: 07748265.1
(22) Date of filing: 21.06.2007
(51) Int. Cl.: B60S 1/28, B60S 1/34, B60S 1/44, B60S 1/56, B66F 9/075

(54) **LOAD HANDLING VEHICLE COMPRISING A WIPER DEVICE**
LASTHANDHABUNGSFAHRZEUG MIT EINER WISCHERVORRICHTUNG
VEHICULE DE MANUTENTION COMPRENANT UN DISPOSITIF D'ESSUIE-GLACE

(30) Priority: 11.07.2006 SE 0601529
(43) Date of publication of application: 25.03.2009
(73) Proprietor: Cargotec Patenter Handelsbolag, 341 81 Ljungby (SE)
(72) Inventor: EKLUND, Sven-Gunnar, S-341 39 Ljungby (SE); GARTNELL, Lars, S-302 73 Halmstad (SE)
(74) Representative: Lundquist, Lars-Olof
(86) International application number: PCT/SE2007/000602
(87) International publication number: WO 2008/013490

(56) References cited:
- EP-A2- 0 949 188
- EP-A2- 1 195 297
- WO-A1-2005/054019
- FR-A1- 2 723 054
- GB-A- 839 922
- GB-A- 839 922
- GB-A- 2 180 509

## Description

The present invention relates to a load handling vehicle, which comprises a cab, comprising a front pane arranged in the front wall of the cab and a roof pane arranged in the roof of the cab, on one hand, and a wiper device for maintaining good visibility through said panes, on the other hand.

When operating fork-lift trucks, it is important that the operator of the fork-lift truck has a good visibility through the front pane of the fork-lift truck, so that he can operate the loading means of the fork-lift truck in a safe way.

In order to maintain good visibility also during precipitation, fork-lift trucks usually have a device for removing the precipitation from the front pane. In order to obtain good visibility, the wiper device should have the capacity to clean as large a portion of the front pane as possible. At the same time, the wiper device should be designed so that wiper arms, link arms, wiper motor, etc. do not obstruct the view for the operator, neither when the wiper device is in use nor when it is not used.

In load handling vehicles in general, and in fork-lift trucks in particular, it is important that the operator has good visibility in the forward/downward direction. Lifting and lowering goods with the forks of the fork-lift truck is a precision work which requires good visibility through the lower portion of the front pane. Accordingly, the installation of windshield wipers at the lower portion of the front pane, as is common for example in passenger cars, is an alternative which is avoided, if possible.

US 4 675 933 discloses a fork-lift truck, having a wiper device mounted at the upper portion of the front pane. This installation provides a good visibility for the operator in the forward/downward direction. One disadvantage of this wiper device, however, is that front panes usually are of a rectangular shape, whereas the wiper blade of the wiper device in US 4 675 933 performs a pivoting movement, i.e. sweeps over a circular sector. Accordingly, there are portions of the front pane, namely the corners of the pane, which are not reached by the wiper blade, implying inferior visibility through these portions during precipitation.

In addition to a front pane, fork-lift trucks and other load handling vehicles usually also have a roof pane. In fork-lift trucks, the roof pane makes it possible for the operator to supervise load when the fork-lift truck operates with raised forks. When maintaining the visibility through the roof pane, the same requirements apply as for the front pane, i.e. that the wiper device should have the capacity to clean as large a portion of the roof pane as possible, without obstructing the view for the operator.

The present invention seeks to produce a vehicle having such a wiper device, and which wiper device simultaneously solves the above-mentioned problems associated with previously known wiper devices.

The vehicle according to the invention is characterized in that the wall and the roof meet each other in an arc-shaped edge, and in that the wiper device comprises:
- a drive arm, being pivotally arranged in the roof at a first pivoting point, which is positioned at the centre of curvature of the edge, said drive arm having a front end, which is arranged to follow the edge during the pivoting movement of the drive arm about the pivoting point while being actuated by a drive source,
- a first wiper arm with associated wiper blade, being rigidly attached, in the direction of the edge, to the front end of the drive arm,
- a second wiper arm with associated wiper blade, being attached to the drive arm via a link arm system, and
- said link arm system comprising a parallel arm, on one hand, being pivotally arranged in the roof of the cab at a second pivoting point, and a connecting link, on the other hand, being articulately connected to the parallel arm at a first linking point and to the drive arm at a second linking point, to which connecting link the second wiper arm with associated wiper blade is attached.

By means of the invention, both the first wiper arm and the second wiper arm, with the respective associated wiper blade, is caused to substantially perform a translational movement across its respective pane. Thereby, the wiper blades are allowed to sweep across the respective pane also out into the corners. Furthermore, the invention allows both the first wiper arm and the second wiper arm to be driven by one and the same drive source, something which reduces the amount of potentially view-obstructing equipment, on one hand, and which makes the wiper device cheaper, on the other hand.

In the following, the invention will be described closer with reference to the attached Figures.
Figure 1 shows portions of a cab of a fork-lift truck, said cab comprising a wiper device according to one embodiment of the invention.
Figure 2-4 show the wiper device of Figure 1 in different views.
Figure 5 shows the cab of Figure 1 in a top view, in which the rear portion of the cab roof has been removed in order to reveal the drive source of the wiper device.

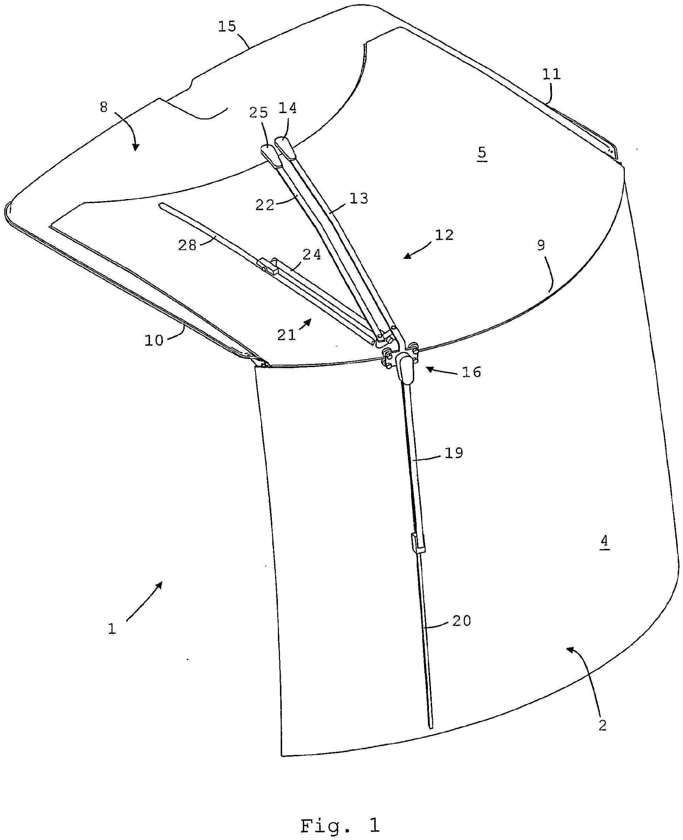

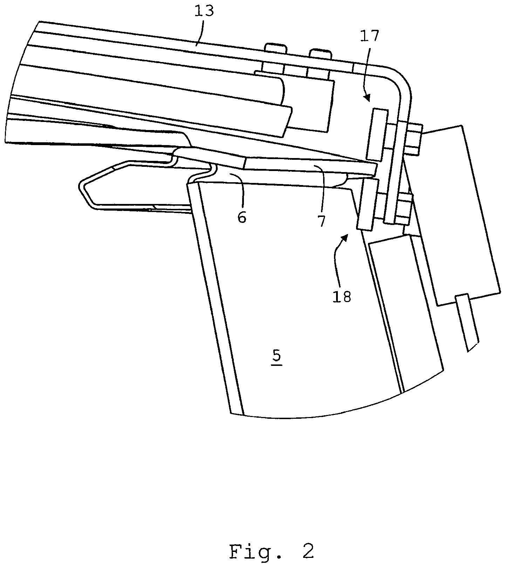

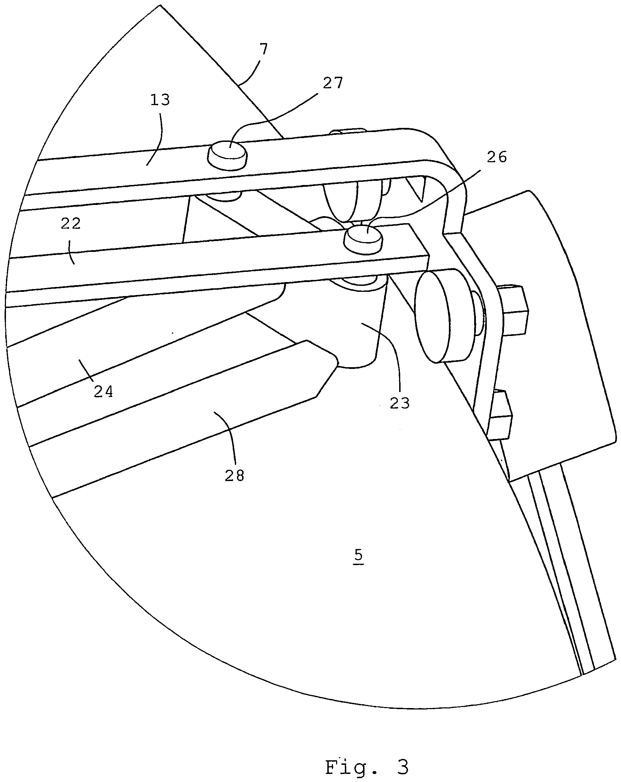

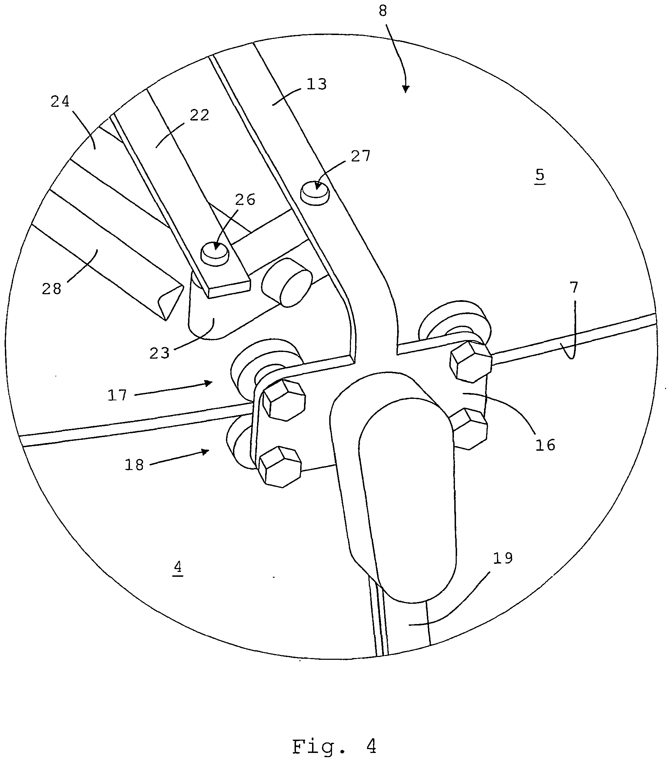

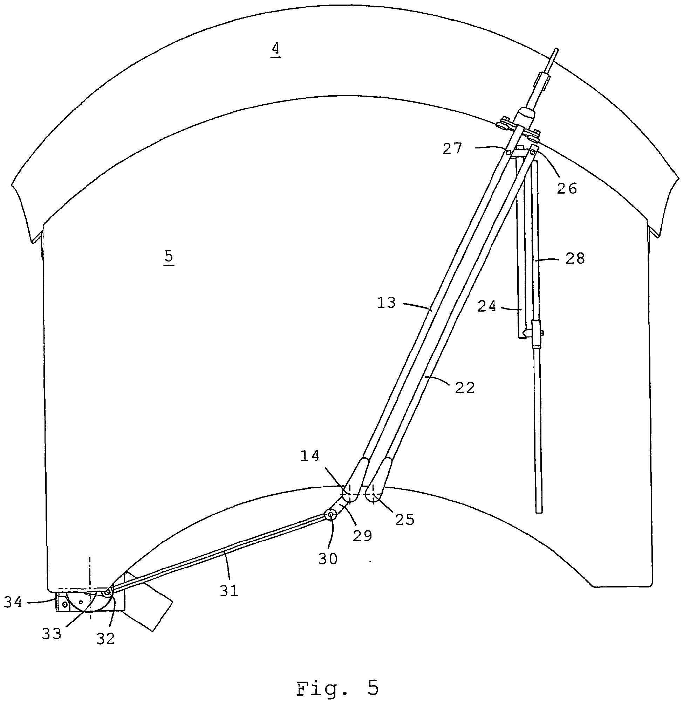

Figures 1-5 show portions of a cab 1 in a load handling vehicle, more specifically in a fork-lift truck. The cab 1 comprises a front wall 2, exhibiting a front pane 4, and a roof 8, exhibiting a roof pane 5. Laterally, i.e. in the cross-direction of the cab 1, the front pane 4 is arched and extends between two internal, front corner posts (not shown) of the cab 1. In the height direction, the front pane 4 extends substantially the entire height of the cab and is delimited upwards by a strip 6 (see Figure 2), on which the front portion of the roof 8 is resting. The front pane 4 is not entirely vertical, but has an inclination being smaller than 90 degrees, which is most clearly evident from Figure 5. Accordingly, the front pane 4 covers substantially the entire front wall 2 and provides a good forward visibility for the operator of the fork-lift truck. The roof pane 5 extends longitudinally, i.e. in the length direction of the cab 1, from the front portion of the roof 8 to a position slightly behind the operator's seat (not shown) of the cab 1. Laterally, the roof pane 5 extends substantially the entire width of the cab 1 and is delimited laterally by two longitudinal, and substantially parallel, water draining side edges 10, 11 of the roof 8. Accordingly, the roof pane 5 covers substantially the entire front portion of the roof 8 and gives the operator good upward visibility. The front pane 4 and the roof pane 5 are preferably constituted of clear, i.e. transparent, impact-resistant polycarbonate plastic, which is approximately 1 centimetre thick.

The roof 8 and the front wall 2 meet each other in an edge 9, which is arc-shaped. The edge 9 exhibits a projecting portion 7 (see Figure 2), which projects approximately 3 centimetres in front of the strip 6. The projecting portion 7, which is constituted of the roof pane 5 in the shown embodiment, follows the shape of the edge 9 and is, accordingly, also arc-shaped.

In order to maintain good visibility during precipitation, the fork-lift truck comprises a wiper device 12 for removing the precipitation from the front pane 4 and the roof pane 5. For this purpose, the wiper device 12 comprises an elongated drive arm 13, which is arranged to perform a pivoting movement above and substantially in parallel with the roof pane 5. The drive arm 13 is pivotally connected to the roof 8 at a first pivoting point 14, which has a pivot axis being orthogonal to and passing through the roof 8. In other words, the drive arm 13 is arranged to perform a pure pivoting movement about the pivoting point 14. The pivoting point 14 is positioned along the centre line of the fork-lift truck, approximately half a meter in front of the rear edge 15 of the roof 8 and right behind the rear edge of the roof pane 5. The length of the drive arm 13 is approximately 1 metre.

In addition to constituting a pivot axis for the drive arm 13, the pivoting point 14 constitutes a centre of curvature for the common, arc-shaped edge 9 of the roof 8 and the front wall 2. Also the rear edge of the roof pane 5 exhibits the same radius of curvature as the edge 9, except closest to the side edges 10, 11, where the rear edge of the roof pane 5 is straight.

The length of the drive arm 13 in front of the pivoting point 14 is adapted such that it extends somewhat in front of the edge 9. Accordingly, the drive arm 13 extends from the rear edge of the roof pane 5 up to and somewhat past the front edge of the roof pane 5. At its front end, the drive arm 13 exhibits a downwardly angled portion, being designed as a carriage 16. The carriage 16 comprises an upper pair 17 of guide wheels, being arranged to run on the upper side of the projecting portion 7, and a lower pair 18 of guide wheels, being arranged to run along the underside of the projecting portion 7. Accordingly, the carriage 16 is arranged to run along the arc-shaped edge 9, while being actuated by the remaining portion of the drive arm 13, and the pairs 17, 18 of guide wheels are ensuring that the front end of the drive arm 13 follows the edge 9 during the pivoting movement of the drive arm 13 about the pivoting point 14.

In order to remove precipitation from the front pane 4, the wiper device 12 comprises a first, front wiper arm 19, being attached to the carriage 16. The front wiper arm 19 extends down across the front pane 4 in its fall line. Laterally, i.e. in the direction of the edge 9, the wiper arm 19 is rigidly attached to the carriage 16 and, accordingly, the wiper arm 19 substantially performs a translational movement across the front pane 4 during the pivoting movement of the drive arm 13 about the pivoting point 14 and the movement of the carriage 16 along the edge 9. In this context, translational movement refers to a parallel displacement without any simultaneous pivoting movement. Due to the fact that the inclination of the front pane 5 deviates from the vertical, the movement of the wiper arm 19 across the front pane is not a pure translational movement, but a certain amount of pivoting movement of the wiper arm 19 relative to the front pane 4 occurs. In practice, however, this pivoting movement is negligible at the degrees of inclination occurring in load handling vehicles, where the inclination of the front pane is substantially vertical, and the movement of the wiper arm 19 is substantially a translational movement. A wiper blade 20 is in a known fashion articulately attached to the wiper arm 19, and in a known fashion the wiper arm 19 preferably comprises a spring-loaded joint (not shown), which ensures that the wiper blade 20 abuts against the front pane 4 with a force required for enabling the wiper blade 20 to remove water from the front pane 4 during said translational movement. Preferably, the wiper blade 20 has a length which is somewhat shorter than the height of the front pane 4, whereby the wiper blade 20 sweeps across substantially the entire front pane 4 in one passage.

In order to remove precipitation from the roof pane 5, the wiper device 12 comprises a link arm system 21, comprising an elongated parallel arm 22, a connecting link 23 and an upper wiper arm 24. In its first, upper end, the parallel arm 22 is pivotally attached to the roof 8 at a second pivoting point 25. The pivoting point 25, having a pivot axis which is orthogonal to the roof 8, is arranged at a predetermined distance from the first pivoting point 14, i.e. from the pivoting point 14 of the drive arm 13. The second pivoting point 25 is preferably arranged flush with, and slightly to the side of the first pivoting point 14. In the present case, the second pivoting point 25 is positioned flush with the first pivoting point 14 and approximately five centimetres to the side of the same. The parallel arm 22 is elongated and its second, lower end is articulately connected to the connecting link 23 at a first linking point 26. The connecting link 23 is also articulately connected to the drive arm 13 at a second linking point 27, preferably being positioned as close to the edge 9 as possible. In the present case, the linking point 27 is positioned approximately five centimetres behind the edge 9. The length of the parallel arm 22 is preferably adapted such that the distance between the second pivoting point 25 and the first linking point 26 corresponds to the distance between the first pivoting point 14 and the second linking point 27. Accordingly, the length of the parallel arm 22 is somewhat smaller than 1 metre in this case. Furthermore, the connecting link 23 is preferably designed such that the distance between the linking points 26 and 27 corresponds to the distance between the pivoting points 14 and 25. In other words, the distance between the linking points 26 and 27 is approximately five centimetres in this case.

In the plane of the roof pane 5, one, lower end of the wiper arm 24 is rigidly attached to the connecting link 23 at a position in the middle of the same. The wiper arm 24 has a length which approximately corresponds to half the length of the parallel arm 22, and a wiper blade 28 is in a known fashion articulately attached to the second, upper end of the wiper arm 24 in a horizontal joint, being positioned substantially in the middle of the wiper blade 28. The wiper blade 28 has a length which is somewhat shorter than the longitudinal extension of the roof pane 5.

Since the distance between the first pivoting point 14 and the second linking point 27 is equal to the distance between the second pivoting point 25 and the first linking point 26, and since the distance between the pivoting points 14 and 25 is equal to the distance between the linking points 26 and 27, as is preferred, it is ensured that the parallel arm 22 is always parallel to the drive arm 13. Accordingly, in such a case, the connecting link 23, together with the rigidly attached wiper arm 24 with associated wiper blade 28, performs a pure translational movement across the roof pane 5 during the pivoting movement of the drive arm 13 about the pivoting point 25. Alternatively, the distance between the first pivoting point 14 and the second linking point 27 can be allowed to deviate somewhat from the distance between the second pivoting point 25 and the first linking point 26, whereby the wiper arm 24 with associated wiper blade 28 is caused to perform a combined translational and pivoting movement across the roof pane 5. The same effect is obtained if the distance between the pivoting points 14 and 25 is allowed to deviate from the distance between the linking points 26 and 27. The combined translational and pivoting movement can be preferable if the side edges of the roof pane 5 are not entirely parallel.

Accordingly, during the reciprocating movement of the carriage 16 along the edge 9, the wiper blade 28 will sweep back and forth between the side edges of the roof pane 5 and a good coverage of substantially the entire roof pane 5 is obtained. In a known fashion, the wiper arm 24 preferably comprises a spring-loaded joint (not shown), which ensures that the wiper blade 28 conformingly abuts against the roof pane 5 with a force required for enabling the wiper blade 28 to remove water from the roof pane 5 during its movement across the roof pane 5. Alternatively, the own weight of the upper wiper arm 24 can ensure that the wiper blade 28 abuts against the roof pane 5 with the required force.

The pivot axis of the drive arm 13 at the pivoting point 14 extends through the cab roof and is rigidly attached to a short and substantially horizontal lever arm 29 below the cab roof. At a linking point 30, the lever arm 29 is articulately connected to one end of a link arm 31. At a linking point 32 at its other end, the link arm 31 is articulately connected to a crank 33, said crank 33 in its turn being rigidly attached to a motor shaft (not visible) of a drive source in the form of an electrical motor 34, which is positioned below the roof 8 at one of the rear corner posts (not shown) of the cab 1. By means of the crank 33, the link arm 31 and the lever arm 29, a rotary motion of the motor shaft is converted into a reciprocating pivoting movement of the drive arm 13 and thereby into said translational movement of the front wiper arm 19 and of the upper wiper arm 24, respectively. In a known fashion, the electrical motor 34 has a selectable parking position, whereby the wiper device, when not being used, can be parked in an optional parking position. Alternatively, the electrical motor has a predetermined parking position, wherein a predetermined parking position of the wiper device can be set by means of mounting the crank 33 in an optional angle relative to the motor shaft when the electrical motor 34 is in its parking position.

In the foregoing, the invention has been described starting from a specific embodiment. Its is appreciated, however, that alternative embodiments and variants are possible within the scope of the invention. For instance, the wiper device can comprise a relief arrangement which is controllable by the operator, enabling the operator to lift the upper wiper arm 24 so that the wiper blade 28 clears the roof pane 5. Thereby, the advantage is obtained that the sweeping of the roof pane 5 can be interrupted independently of the sweeping of the front pane 4. Alternatively and preferably, the linking point 27 is disengageable, whereby the link arm system 21 is disconnected entirely from the movement of the drive arm 13.

Furthermore, it is appreciated that the front end of the drive arm 13 can be arranged to follow the arc-shaped edge 9 in other ways than by means of the described pairs 17, 18 of guide wheels. For instance, the front end of the drive arm 13 can travel in a sliding strip following the edge 9. It is also appreciated that the drive source can be of another type than the above-described electrical motor and that the drive source can be positioned differently without departing from the inventive idea.

## Claims

1. Load handling vehicle, which comprises a cab (1), comprising a front pane (4) arranged in the front wall (2) of the cab (1) and a roof pane (5) arranged in the roof (8) of the cab (1), on one hand, and a wiper device (12) for maintaining good visibility through said panes (4, 5), on the other hand,
**characterized in that** the wall (2) and roof (8) meet each other in an arc-shaped edge (9), and **in that** the wiper device (12) comprises:
- a drive arm (13), being pivotally arranged in the roof (8) at a first pivoting point (14), which is positioned at the centre of curvature of the edge (9), said drive arm (13) having a front end which is arranged to follow the edge (9) during the pivoting movement of the drive arm (13) about the pivoting point (14) while being actuated by a drive source (39);
- a first wiper arm (19) with associated wiper blade (20), being rigidly attached, in the direction of the edge (9), to the front end of the drive arm (13),
- a second wiper arm (24) with associated wiper blade (28), being attached to the drive arm (13) via a link arm system (21); and
- said link arm system (21) comprising a parallel arm (22), on one hand, being pivotally arranged in the roof (8) at a second pivoting point (25), and a connecting link (23), on the other hand, being articulately connected to the parallel arm (22) at a first linking point (26) and to the drive arm (13) at a second linking point (27), to which connecting link (23) the second wiper arm (24) with associated wiper blade (28) is attached.

2. Vehicle (1) according to claim 1, **characterized in that** the distance between the first pivoting point (14) and the second linking point (27) is equal to the distance between the second pivoting point (25) and the first linking point (26), and **in that** the distance between said pivoting points (14, 25) is equal to the distance between said linking points (26, 27).

3. Vehicle (1) according to claim 1, **characterized in that** the edge (9) exhibits a projecting portion (7) and that the drive arm (13) at its front end exhibits a downwardly angled portion, which is designed as a carriage (16), said carriage (16) comprising an upper pair (17) of guide wheels, being arranged to run on the upper side of the projecting portion (7), and a lower pair (18) of guide wheels, being arranged to run along the underside of the projecting portion (7).

4. Vehicle (1) according to any one of claims 1-3, **characterized in that** the second pivoting point (25) is arranged flush with the first pivoting point (14).

5. Vehicle (1) according to claim 4, **characterized in that** the distance between the first pivoting point (14) and the second pivoting point (25) is approximately five centimetres.

6. Vehicle (1) according to claim 5, **characterized in that** the second linking point (27) is arranged approximately five centimetres behind the edge (9).

7. Vehicle (1) according to any one of claims 1-6, **characterized in that** the pivot axis of the fist pivoting point (14) extends through the roof (8) and that the pivot axis is connected to said drive source (34).

8. Vehicle (1) according to claim 7, **characterized in that** the drive source (34) is positioned below the roof (8) at one rear corner post of the cab (1).

9. Vehicle (1) according to claim 8, **characterized in that** the drive source (34) is an electrical motor having a parking position.

10. Vehicle (1) according to any one of claims 1-9, **characterized in that** the vehicle is a fork-lift truck.

## Patentansprüche

1. Lasthandhabungsfahrzeug, das ein Fahrerhaus (1) aufweist, welches einerseits eine Frontscheibe (4), die in der Vorderwand (2) des Fahrerhauses (1) angeordnet ist, und eine Dachscheibe (5), die in dem Dach (8) des Fahrerhauses (1) angeordnet ist, und andererseits eine Scheibenwischvorrichtung (12) zum Aufrechterhalten einer guten Sicht durch die Scheiben (4, 5) aufweist,
**dadurch gekennzeichnet, dass** die Wand (2) und das Dach (8) in einer bogenförmigen Kante (9) aufeinandertreffen, und dass die Scheibenwischvorrichtung (12) Folgendes aufweist:
- Einen Antriebsarm (13), der in dem Dach (8) an einem ersten Drehpunkt (14) drehbar angeordnet ist, der an dem Mittelpunkt der Krümmung der Kante (9) angeordnet ist, wobei der Antriebsarm (13) ein vorderes Ende aufweist, welches so angeordnet ist, dass es der Kante (9) während der Drehbewegung des Antriebsarmes (13) um den Drehpunkt (14) folgt, während es von einer Antriebsquelle (34) betätigt wird;
- einen ersten Wischerarm (19) mit dazugehörigem Wischerblatt (20), welcher in Richtung der Kante (9) starr an dem vorderen Ende des Antriebsarmes (13) befestigt ist,
- einen zweiten Wischerarm (24) mit dazugehörigem Wischerblatt (28), welcher über ein Verbindungsarmsystem (21) an dem Antriebsarm (13) befestigt ist; und
- wobei das Verbindungsarmsystem (21) einerseits einen parallelen Arm (22), der in dem Dach (8) an einem zweiten Drehpunkt (25) drehbar angeordnet ist, und andererseits ein Verbindungsglied (23) aufweist, das gelenkig mit dem parallelen Arm (22) an einem ersten Verbindungspunkt (26) und mit dem Antriebsarm (13) an einem zweiten Verbindungspunkt (27) verbunden ist, wobei der zweite Wischerarm (24) mit dem dazugehörigen Wischerblatt (28) mit dem Verbindungsglied (23) verbunden ist.

2. Fahrzeug (1) nach Anspruch 1,
**dadurch gekennzeichnet, dass**
der Abstand zwischen dem Drehpunkt (14) und dem zweiten Verbindungspunkt (27) gleich dem Abstand zwischen dem zweiten Drehpunkt (25) und dem ersten Verbindungspunkt (26) ist, und dass der Abstand zwischen den Drehpunkten (14, 25) gleich dem Abstand zwischen den Verbindungspunkten (26, 27) ist.

3. Fahrzeug (1) nach Anspruch 1,
**dadurch gekennzeichnet**, d**ass**
die Kante (9) einen hervorstehenden Abschnitt (7) aufweist, und dass der Antriebsarm (13) an seinem vorderen Ende einen nach unten abgewinkelten Abschnitt aufweist, der als Trägerschlitten (16) konstruiert ist, der ein oberes Paar (17) von Führungsrädern, die angeordnet sind, um auf der Oberseite des hervorstehenden Abschnitts (7) zu laufen, und ein unteres Paar (18) von Führungsrädern aufweist, die angeordnet sind, um entlang der Unterseite des hervorstehenden Abschnitts (7) zu laufen.

4. Fahrzeug (1) nach einem der Ansprüche 1-3,
**dadurch gekennzeichnet, dass**
der zweite Drehpunkt (25) bündig mit dem ersten Drehpunkt (14) angeordnet ist.

5. Fahrzeug (1) nach Anspruch 4,
**dadurch gekennzeichnet, dass**
der Abstand zwischen dem ersten Drehpunkt (14) und dem zweiten Drehpunkt (25) etwa fünf Zentimeter beträgt.

6. Fahrzeug (1) nach Anspruch 5,
**dadurch gekennzeichnet, dass**
der zweite Verbindungspunkt (27) etwa fünf Zentimeter hinter der Kante (9) angeordnet ist.

7. Fahrzeug (1) nach einem der Ansprüche 1-6,
**dadurch gekennzeichnet, dass**
sich die Drehachse des ersten Drehpunktes (14) durch das Dach (8) erstreckt, und dass die Drehachse mit der Antriebsquelle (34) verbunden ist.

8. Fahrzeug (1) nach Anspruch 7,
**dadurch gekennzeichnet, dass**
die Antriebsquelle (34) unter dem Dach (8) an einem hinteren Eckpfosten des Fahrerhauses (1) positioniert ist.

9. Fahrzeug (1) nach Anspruch 8,
**dadurch gekennzeichnet, dass**
die Antriebsquelle (34) ein elektrischer Motor ist, der eine Parkstellung aufweist.

10. Fahrzeug (1) nach einem der Ansprüche 1-9,
**dadurch gekennzeichnet, dass**
das Fahrzeug ein Gabelstapler ist.

## Revendications

1. Véhicule de manutention, qui comprend une cabine (1), comportant une vitre avant (4) ménagée dans la paroi avant (2) de la cabine (1) et une vitre de toit (5) ménagée dans le toit (8) de la cabine (1) d'une part, et un dispositif d'essuie-glace (12) pour maintenir une bonne visibilité à travers lesdites vitres (4, 5) d'autre part,
**caractérisé en ce que** la paroi (2) et le toit (8) se rejoignent dans un bord en forme d'arc (9) et **en ce que** le dispositif essuie-glace (12) comprend:
- un bras d'entraînement (13) ménagé de façon pivotante dans le toit (8) en un premier point de pivotement (14) qui est positionné au centre de courbure du bord (9), ledit bras d'entraînement (13) ayant une extrémité avant qui est agencée pour suivre le bord (9) pendant le mouvement de pivotement du bras d'entraînement (13) autour du point de pivotement (14) lorsqu'il est activé par une source d'entraînement (34);
- un premier bras d'essuie-glace (19), associé à un balai d'essuie-glace (20), fixé rigidement, dans la direction du bord (9), à l'extrémité avant du bras d'entraînement (13),
- un second bras d'essuie-glace (24), associé à un balai d'essuie-glace (28), fixé au bras d'entraînement (13) par l'intermédiaire d'un système de bras de couplage (21), et
- ledit système de bras de couplage (21) comprenant, d'une part, un bras parallèle (22) disposé de façon pivotante dans le toit (8) en un second point de pivotement (25) et, d'autre part une biellette (23) reliée de façon articulée au bras parallèle (22) en un premier point de couplage (26) et au bras d'entraînement (13) en un second point de couplage (27), le second bras d'essuie-glace (24) associé au balai d'essuie-glace (28) étant fixé à cette biellette (23).

2. Véhicule (1) selon la revendication 1, **caractérisé en ce que** la distance entre le premier point de pivotement (14) et le second point de couplage (27) est égale à la distance entre le second point de pivotement (25) et le premier point de couplage (26), et **en ce qu** la distance entre lesdits points de pivotement (14, 25) est égale à la distance entre lesdits points de couplage (26, 27).

3. Véhicule (1) selon la revendication 1, **caractérisé en ce que** le bord (9) présente une partie saillante (7) et **en ce que** le bras d'entraînement (13) présente à son extrémité avant une partie inclinée vers le bas, qui est agencée en tant que chariot (16), ledit chariot (16) comprenant une paire supérieure (17) de roues de guidage agencées pour se déplacer sur le côté supérieur de la partie saillante (7), et une paire inférieure (18) de roues de guidage agencées pour se déplacer le long du dessous de la partie saillante (7).

4. Véhicule (1) selon l'une quelconque des revendications 1-3, **caractérisé en ce que** le second point de pivotement (25) est au même niveau que le premier point de pivotement (14).

5. Véhicule (1) selon la revendication 4, **caractérisé en ce que** la distance entre le premier point de pivotement (14) et le second point de pivotement (25) est approximativement de cinq centimètres.

6. Véhicule (1) selon la revendication 5, **caractérisé en ce que** le second point de couplage (27) est ménagé approximativement cinq centimètres derrière le bord (9).

7. Véhicule (1) selon l'une quelconque des revendications 1-6, **caractérisé en ce que** l'axe de pivotement du premier point de pivotement (14) passe à travers le toit (8), et **en ce que** cet axe de pivotement est relié à ladite source d'entraînement (34).

8. Véhicule (1) selon la revendication 7, **caractérisé en ce que** la source d'entraînement (34) est disposée sous le toit (8) à un montant d'angle arrière de la cabine (1).

9. Véhicule (1) selon la revendication 8, **caractérisé en ce que** la source d'entraînement (34) est un moteur électrique ayant une position de parcage.

10. Véhicule (1) selon l'une quelconque des revendications 1-9, **caractérisé en ce que** le véhicule est un chariot élévateur à fourche.
